# EUROPÄISCHE PATENTSCHRIFT

(11) **EP 1 993 941 B1**
(45) Veröffentlichungstag und Bekanntmachung des Hinweises auf die Patenterteilung: **14.05.2014**
(21) Anmeldenummer: 07702913.0
(22) Anmeldetag: 20.01.2007
(51) Int. Cl.: B65G 17/20, B65G 21/18, B65G 47/51

(54) **FÖRDERMITTEL**
CONVEYING MEANS
MOYEN DE TRANSPORT

(30) Priorität: 16.03.2006 DE 102006012148
(43) Veröffentlichungstag der Anmeldung: 26.11.2008
(73) Patentinhaber: KRONES Aktiengesellschaft, 93073 Neutraubling (DE)
(72) Erfinder: GMEINER, Franz, 93161 Sinzing Ortsteil Eilsbrunn (DE)
(86) Internationale Anmeldenummer: PCT/EP2007/000485
(87) Internationale Veröffentlichungsnummer: WO 2007/104377

(56) Entgegenhaltungen:
- WO-A-2005/073113
- DE-B- 1 080 580
- JP-A- 61 197 376
- US-A- 1 810 419
- US-A- 3 968 861
- US-A- 4 399 909
- US-A- 5 022 609

## Beschreibung

Die Erfindung bezieht sich auf ein Fördermittel der in den Oberbegriffen von Anspruch 1 sowie von Anspruch 10 erläuterten Art.

Ein Fördermittel dieser Art ist aus der US 1 810 419 bekannt. Eine weitere, aus WO 2005/073113 bekannte Förderkette wird in einer Fördereinrichtung zum dynamischen Speichern von Gegenständen verwendet. Zu diesem Zweck wird ein als Förderkette ausgebildetes Fördermittel in einer Führung endlos zwischen einer Eingangsstation und einer Ausgangsstation geführt. Die Förderkette wirkt in einem Bereich als Fördertrum und in einem anderen Bereich als Leertrum, wobei die Länge des Fördertrums und des Leertrums variabel ist und an die Menge der zu fördernden bzw. speichernden Gegenstände angepasst werden kann. Zum Variieren der Länge von Fördertrum und Leertrum ist ein Schlitten vorgesehen, der auf zueinander parallelen Bereichen der Führung läuft. Der Schlitten enthält jeweils eine bogenförmige Umlenkung für das Fördertrum und für das Leertrum, so dass durch Verschieben des Schlittens entlang der Führungsbereiche der Anteil der Förderkette, der als Fördertrum wirkt, gegenüber dem Anteil des Leertrums vergrößert oder verkleinert werden kann. Die Förderkette stützt sich über Laufrollen auf der Führung ab. Beim Übergang von der Führung auf den Schlitten ist es jedoch notwendig, dass zumindest ein Teil der Laufrollen vorübergehend außer Wirkung gesetzt werden kann, um die Laufrollen von der Führung zu lösen und auf den Schlitten zu leiten bzw. vom Schlitten wieder auf die Führung zu bringen. Bei der bekannten Förderkette wird dies dadurch erreicht, dass wenigstens eine Laufrolle verschwenkbar ausgebildet ist, wobei das Verschwenken mit Hilfe eines Schwenkmechanismus geschieht. Beim Schwenkmechanismus der bekannten Förderkette geschieht dies über eine Sperrklinke, die durch eine Drehfeder vorgespannt ist. Die Sperrklinke wirkt mit einem Querstift zusammen, der parallel zur Drehachse angeordnet und mit der Laufrolle verbunden ist. Die Sperrklinke ist so ausgebildet, dass sie die Laufrolle in ihrer Eingriffsposition mit der Führung arretiert, wenn die Sperrklinke mit dem Querstift in Eingriff steht. Die Sperrklinke ist mit einem Betätigungsdaumen verbunden, der durch eine dem Schlitten zugeordnete Steuerfläche so bewegbar ist, dass die Sperrklinke gegen die Kraft der Feder aus ihrem Eingriff mit dem Querstift bewegt wird und somit die Laufrolle zur Verschwenkung freigibt. Die verschwenkte Position der Laufrolle wird dann durch eine bogenförmige Nutkurve am Schlitten definiert. Sobald die Laufrolle wieder in ihrer normalen Förderposition benötigt wird, wird sie durch die Nutkurve zurückgeschwenkt, worauf die Sperrklinke wieder mit dem Querstift in Eingriff bewegt wird, und die Laufrolle arretiert. Die Sperrklinke muss somit bei jedem Durchlauf des Schlittens sowohl im Fördertrum als auch im Leertrum an den Querstift anschlagen, was einerseits unnötige Geräusche verursacht und andererseits zu einem erhöhten Verschleiß führt. Außerdem sind zwei Steuerkurven erforderlich, eine für die Sperrklinken und eine für die Rollenschwenkung.

Der Erfindung liegt somit die Aufgabe zugrunde, eine Förderkette der genannten Art mit einem verbesserten und vereinfachten Schwenkmechanismus bereitzustellen.

Diese Aufgabe wird durch die im Anspruch 1 sowie durch die im Anspruch 10 angegebenen Merkmale gelöst.

Durch die Verwendung eines Kniehebels kann der Schwenkmechanismus entscheidend vereinfacht werden. Der Kniehebel kann direkt mit dem Rollenhebel der Laufrolle verbunden werden, und muss demzufolge für ein Verschwenken der Laufrolle nicht auf einen Querstift oder auf andere Bauelemente aufschlagen. Außerdem ist nur eine Steuerkurve für den Kniehebel erforderlich.

Vorteilhafte Weiterbildungen der Erfindung sind den Unteransprüchen zu entnehmen.

So bietet ein Kniehebel weiterhin den entscheidenden Vorteil, dass zum Arretieren einer bestimmten Position der Laufrolle die Hebelglieder des Kniehebels lediglich in einer bestimmen Relativstellung zueinander arretiert werden müssen. Dies kann durch Federelemente der unterschiedlichsten Art, Selbsthemmung, Magnetelemente oder dgl. geschehen.

Ausführungsbeispiele der Erfindung werden nachfolgend anhand der Zeichnungen näher erläutert. Es zeigen:
- Fig. 1: eine schematische Darstellung einer Fördereinrichtung, bei der die vorliegende Erfindung einsetzbar ist,
- Fig. 2: ein herausvergrößertes Detail aus Fig
- Fig. 3: ein erstes Ausführungsbeispiel der Erfindung,
- Fig. 4: das Ausführungsbeispiel nach Fig. 3 mit verschwenkter Laufrolle,
- Fig. 5: eine perspektivische Darstellung eines weiteren Ausführungsbeispiels der Erfindung,
- Fig. 6: ein erfindungsgemäßes Kettenglied in einer ersten Verwendung, und
- Fig. 7: ein erfindungsgemäßes Kettenglied in einer zweiten Verwendung.

Die Erfindung wird nachfolgend anhand einer Fördereinrichtung F mit einem dynamischen Speicher V1 beschrieben, kann jedoch überall dort eingesetzt werden, wo es notwendig ist oder ratsam erscheint, eine Laufrolle eines Fördermittels gesteuert zu verschwenken.

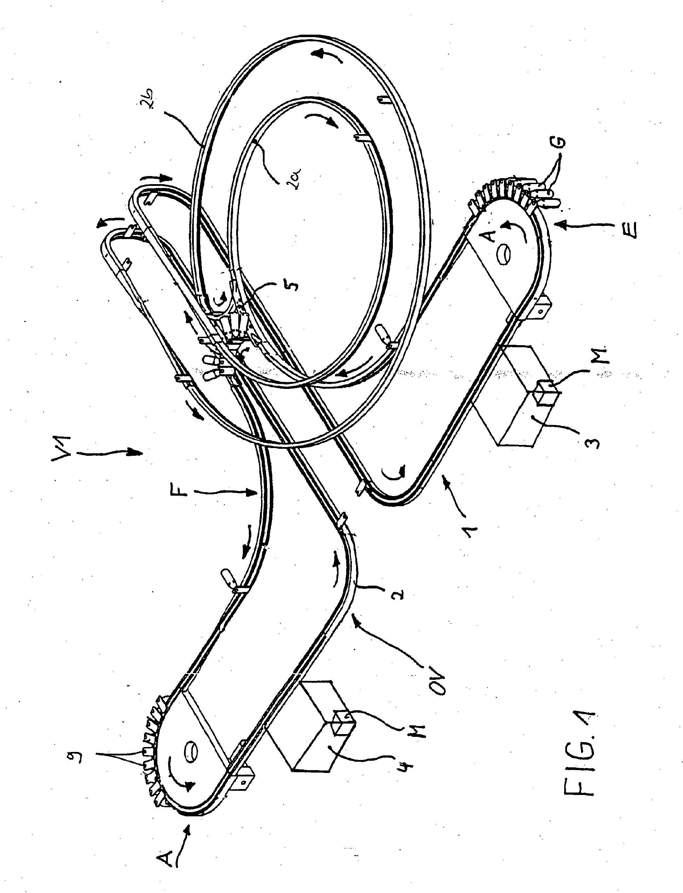

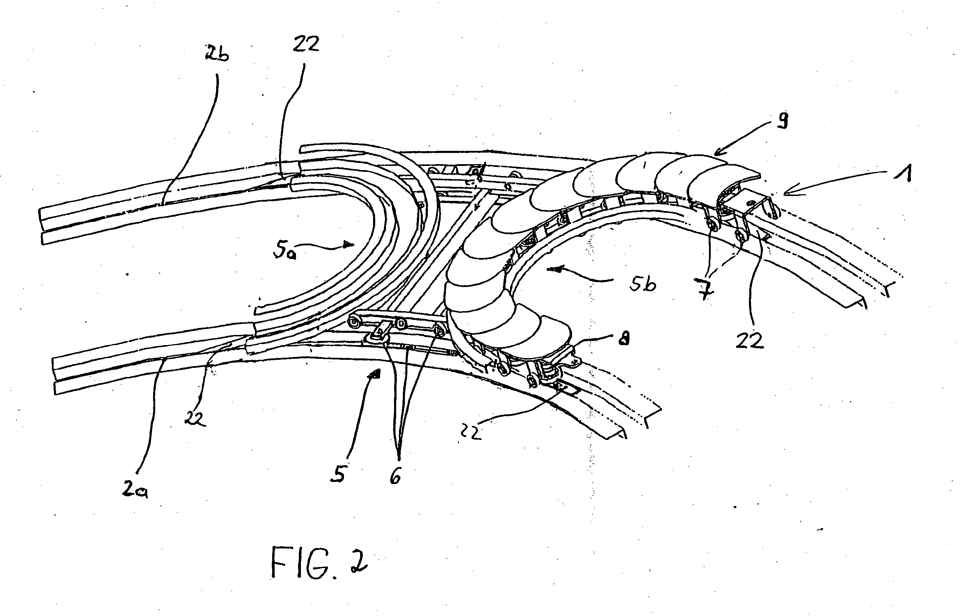

Im dargestellten Ausführungsbeispiel gemäß Fig. 1 entspricht die Fördereinrichtung F der Fördereinrichtung gemäß der WO 2005/073113. Die Fördereinrichtung F ist bevorzugt zum Fördern von Gegenständen G, wie Flaschen der Behälter, zwischen verschiedenen Arbeitsstationen, wie z.B. einer Streckblasmaschine und einer Etikettiermaschine oder zwischen einer Füll- und Verschließmaschine und einer Verpackungsmaschine oder dgl. angeordnet und enthält im Wesentlichen ein einziges, endloses Fördermittel 1 in Form einer Rollenkette, d.h. einer mit Laufrollen versehenen Glieder- oder Förderkette, zum Transportieren von Gegenständen G. Das Fördermittel 1 wird durch eine stationäre Führung 2 derart geleitet, dass es an einer Eingangsstation E und einer Ausgangsstation A vorbeiläuft. Das Fördermittel 1 wird im Bereich der Eingangsstation durch eine erste Antriebseinrichtung 3 mit einem Motor M und im Bereich der Ausgangsstation A durch eine zweite Antriebseinrichtung 4 mit einem Motor M angetrieben. An die Eingangs- und Ausgangsstationen E, A schließt sich ein erster, frei führbarer Bereich, im dargestellten Ausführungsbeispiel ein langovaler Bereich OV der Führung 2 an. Der dynamische Speicher V1 enthält weiterhin wendelförmige Bereiche 2a, 2b der Führung 2, die parallel und im gleichmäßigen Abstand zueinander verlaufen. Auf diesen Bereichen 2a, 2b ist ein Schlitten 5 verfahrbar, der in Fig. 2 näher dargestellt ist. Mit Hilfe dieses Schlittens 5 kann die Länge des Fördertrums des Fördermittels 1 zwischen der Eingangsstation E und der Ausgangsstation A an die Menge der zu fördernden Gegenstände angepasst werden, um das Fördertrum gegenüber dem Leerlauftrum zwischen der Ausgangsstation A und der Eingangsstation E zu verlängern oder zu verkürzen.

Um dies zu bewirken, enthält der Schlitten 5, wie Fig. 2 zeigt, eine erste 180°-Umlenkung 5a und eine zweite 180°-Umlenkung 5b, die der Umlenkung 5a entgegengesetzt ist. Jede Umlenkung 5a, 5b verbindet gegenüberliegende Stellen der parallelen Bereiche 2a, 2b der Führung 2 derart miteinander, dass das Fördermittel aus dem Bereich 2a in den Bereich 2b gelangen kann. Die erste Umlenkung 5a ist dem Fördertrum und die zweite Umlenkung 5b dem Leerlauftrum zugeordnet.

Der Schlitten 5 wird entlang der parallelen Bereiche 2a, 2b durch einen Geschwindigkeitsunterschied der Antriebsstationen 3 und 4 bewegt. Zum Verkürzen des Fördertrums des Fördermittels 1 wird der Schlitten 5 durch das Fördermittel 1 aufgrund eines entsprechenden Geschwindigkeitsunterschieds der Antriebsstationen 3 und 4 in Richtung auf die Eingangsstation E und die Ausgangsstation A bewegt. Zum Verkürzen des Leertrums wird durch einen entsprechenden Geschwindigkeitsunterschied der Antriebsstationen 3 und 4 der Schlitten 5 von der Eingangsstation E und der Ausgangsstation A weg bewegt.

Das Fördermittel 1 stützt sich, wie Fig. 2, rechte Seite, zeigt, über Laufrollen 7 auf der Führung 2 ab. Die Führung 2 kann jede geeignete Form aufweisen, und kann beispielsweise zwei oder mehr parallele Stäbe, Profile unterschiedlicher Querschnitte oder dgl. enthalten. Es können weiterhin, wie insbesondere in Fig. 1 zu sehen, Verwindungsstellen vorgesehen sein, um die zu fördernden Gegenstände G in eine horizontale Lage und wieder zurück zu verschwenken.

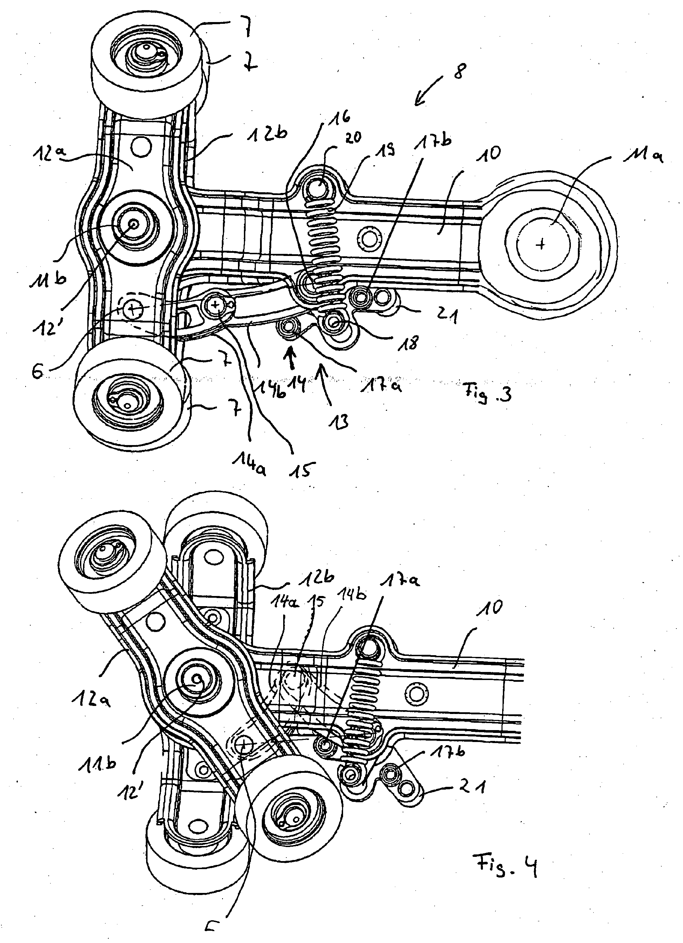

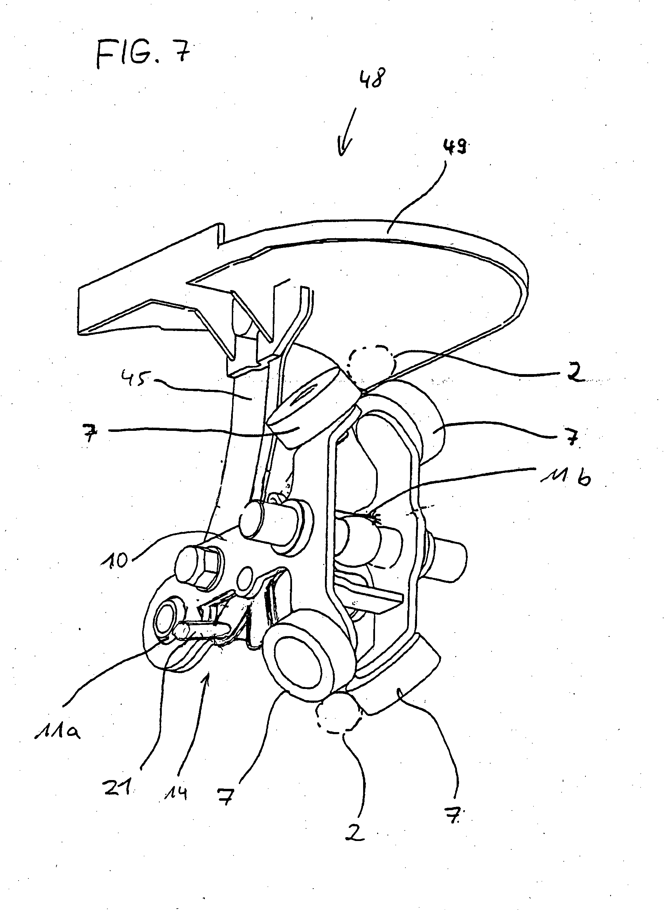

Im dargestellten Ausführungsbeispiel besteht das Fördermittel aus einer Vielzahl kettengliedartiger Strukturen 8, die in Reihe hintereinanderliegend gelenkig miteinander verbunden sind und jeweils Laufrollen 7 und eine Halteeinrichtung 9 für Gegenstände G tragen. Die Kettenglieder 8 müssen nicht selbständig verfahrbar sein, können also auch eine Konstruktion aufweisen, die zu einer instabilen Lage der Rollen auf der Führung führen würde, wenn sich die einzelnen Kettenglieder 8 nicht gegenseitig abstützen würden. Ein derartiges Kettenglied 8 ist beispielsweise in den Fig. 3 und 4 näher dargestellt. Das gabelartige Kettenglied 8 enthält einen Träger 10, an dessen beiden Enden Lagerelemente 11a, 11b zum gelenkigen Vereinigen einer Vielzahl der Kettenglieder 8 zum endlosen Fördermittel 1 vorgesehen sind. Bevorzugt enthalten die Lagermittel 11a, 11b ein allseitig schwenkbares Gelenk, z.B. ein Kalottenlager, so dass das Fördermittel 1 raumgängig ist. Am Träger 11 sind weiterhin die Laufrollen 7 an den durch die Führung 2 vorgegebenen Stellen und in der durch die Führung 2 vorgegebenen Ausrichtung befestigt. Die Laufrollen 7 der Fig. 3 und 4 sind beispielsweise für parallele, übereinander liegende Stäbe (Fig. 7) oder ein dachförmiges Laufprofil der Führung 2 oder dgl. ausgebildet. Am Kettenglied 8 sind vier Laufrollen 7 vorgesehen, die paarweise an einem als Doppelhebel ausgebildeten Rollenhebel 12a bzw. 12b drehbar gelagert sind. Die Rollenhebel 12a, 12b stehen beidseitig vom Träger 10 vor, so dass sich eine im Wesentlichen T-förmige Anordnung der Rollenhebel 12a, 12b zum Träger 10 ergibt.

Wenigstens einer der Rollenhebel, im dargestellten Ausführungsbeispiel der Rollenhebel 12a, ist über eine Drehachse 12' derart drehbar am Träger 10 befestigt, dass er mit dem Träger 10 einen von 90° abweichenden Winkel einnehmen kann. Der andere Rollenhebel 12b ist in einer 90°-Stellung zum Träger 10 an diesem fixiert. Je nach Bedarf können jedoch die Rollenhebel 12 unter anderen Winkeln oder in anderer Weise mit dem Träger 10 verbunden sein.

Zum Bewegen des verschwenkbaren Rollenhebels 12a in eine vom Rollenhebel 12b abweichende Winkelstellung bezüglich des Trägers 10 ist ein federbelasteter Schwenkmechanismus 13 vorgesehen. Der Schwenkmechanismus 13 enthält einen Kniehebel 14, der ein erstes und ein zweites Hebelglied 14a, 14b enthält, die über ein Gelenk 15 schwenkbar miteinander verbunden sind. Das erste Hebelglied 14a steht mit dem schwenkbaren Rollenhebel 12a über ein Gelenk 6 derart in Verbindung, dass bei einer Bewegung des Hebelgliedes 14a der Rollenhebel 12a um seine Achse 12' verschwenkbar ist. Zu diesem Zweck greift das erste Hebelglied 14a im Abstand zur Achse 12' am Rollenhebel 12a an. Das zweite Hebelglied 14b ist um eine durch einen Lagerbolzen oder dgl. gebildete Achse 16 schwenkbar am Träger 10 gelagert. Fest mit dem zweiten Hebelglied 14b verbunden und mit diesem um den Lagerbolzen 16 verschwenkbar sind ein erster Anschlag 17a und ein zweiter Anschlag 17b sowie ein Anlenkpunkt 18 in Form eines Befestigungsstiftes oder dgl.. Der Anlenkpunkt 18 dient der Befestigung eines Federelements, hier einer Zugfeder 19, die mit ihrem anderen Ende an einem Anlenkpunkt 20 am Träger 10 festgelegt ist. Der Anlenkpunkt 18 weist einen Abstand zur Drehachse 16 auf und ist derart angeordnet, dass eine geradlinige Verbindung zwischen den Anlenkpunkten 18 und 20 in den beiden Endstellungen gemäß Fig. 3 und 4 nicht durch die Drehachse 16 verläuft.

Mit dem zweiten Hebelglied 14b des Kniehebels 14 ist weiterhin ein Betätigungselement 21 in Form eines über den Träger 10 vorstehenden Betätigungsstiftes oder dgl. fest verbunden.

Der Kniehebel 14 und die Anordnung der Anlenkpunkte 18, 20 der Zugfeder 19 ist so ausgebildet, dass sich die beiden Rollenhebel 12a, 12b in einer parallelen, gleichgerichteten Position befinden, wenn die beiden Hebelglieder 14a, 14b eine Relativposition zueinander unter einem großen, stumpfen, aber bevorzugt von 180° verschiedenen Winkel einnehmen (Fig. 3). In dieser Relativstellung der Hebelglieder 14a, 14b ist die Parallelposition der Rollenhebel 12a, 12b durch den an einem trägerfesten Gegenstück anschlagenden Anschlag 17b fixiert, der durch die sich an einer Seite ihres Totpunktes befindende Feder 19 arretiert wird. Die Feder 19 sorgt somit für eine bistabile Arretierung des Kniehebels 14 in den beiden durch die Anschläge 17a, 17b definierten Endpositionen beiderseits der Strecklage. Außerdem unterstützt sie erforderlichenfalls das Anfahren dieser Endpositionen, so dass die Steuerflächen 22 das Hebelglied 14b jeweils nur so weit verschwenken müssen, bis die Feder 19 ihre Tot- oder Strecklage überschritten hat. Die Stabilisierung in der Parallellage des Schwenkhebels 12a nach Fig. 3 wird noch dadurch unterstützt, dass das Gelenk 15 etwas unterhalb der strichpunktiert eingezeigten Verbindungsgeraden zwischen dem Gelenk 6 und der Achse 16 liegt.

Die in Fig. 4 gezeigte Scherenposition der beiden Rollenhebel 12a, 12b wird durch eine Relativstellung der Hebelglieder 14a, 14b unter einem kleineren, stumpfen oder spitzen Winkel definiert, der dadurch fixiert wird, dass der Anschlag 17a an einem trägerfesten Gegenstück anliegt. Um in diese Position zu gelangen, nimmt das erste Hebelglied 14b das zweite Hebelglied 14a mit, während sich der Anlenkpunkt 18 der Feder 19 über den Totpunkt in seine zweite Arretierungsstellung bewegt, in der die in Fig. 4 gezeigte Stellung der Rollenhebel 12a, 12b arretiert ist.

Das Verschwenken des Hebelglieds 14b und damit des Rollenhebels 12a am Träger 10 wird dadurch bewirkt, dass das Betätigungselement 21 mit einer Steuerfläche 22 (Fig. 2) in Kontakt kommt, die dort am Schlitten 5 angeordnet ist, wo es notwendig ist, zumindest einen Teil der Laufrollen, beispielsweise die bogenäußeren Laufrollen am Übergang zwischen den parallelen Bereichen 2a, 2b und den Umlenkungen 5a, 5b von der Führung 2 zu lösen und wieder mit der Führung 2 in Eingriff zu bringen. Wie Fig. 2 zeigt, ist die Steuerfläche 22 bevorzugt als Kurvenrampe ausgebildet. Es soll jedoch darauf hingewiesen werden, dass die Ausgestaltung der Steuerflächen und deren Anordnung und Ausrichtung selbstverständlich an die Art des Kettengliedes 8 angepasst sein muss.

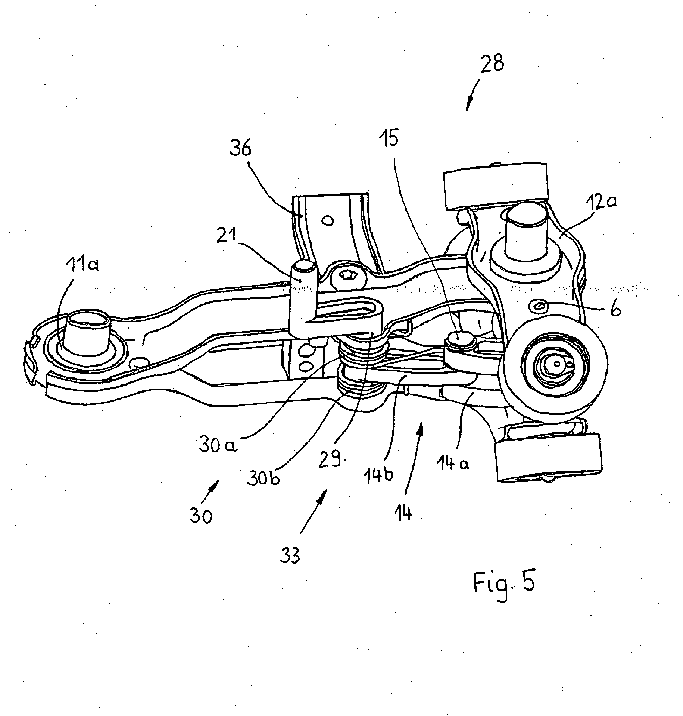

Fig. 5 zeigt ein weiteres Ausführungsbeispiel eines Kettengliedes 28, das bis auf die nachfolgend beschriebenen Einzelheiten dem Kettenglied 8 entspricht. Auch das Kettenglied 28 enthält, einen Kniehebel 14, dessen erstes Hebelglied 14a mit dem verschwenkbaren Rollenhebel 12a mittels eines Gelenks 6 schwenkbar verbunden ist und dessen zweites Hebelglied 14b mit einem Betätigungselement 21 in Verbindung steht. Das Betätigungselement 21 betätigt einen Drehstift 29, an dem das zweite Hebelglied 14b befestigt ist. Der Schwenkmechanismus 33 des Kettengliedes 28 enthält wiederum ein Federelement, das hier jedoch als Drehfeder, bevorzugt als zwei Drehfedern 30a, 30b ausgebildet ist. Jede der Drehfedern 30a, 30b beaufschlagt mit ihrem einen Ende den Kniehebel 14 in einer Relativstellung der beiden Hebelglieder 14a, 14b, die der Parallelposition der Rollenhebel 12a, 12b entspricht. Das andere Ende der Drehfeder 30a, 30b stützt sich trägerfest ab. Kommt das Betätigungselement 21 mit einer geeigneten Steuerfläche 22 in Eingriff, so verdreht sich der Drehstift 29 zusammen mit dem Kniehebel 14 gegen die Kraft der Drehfeder 30a, 30b in eine Relativposition, die der Scherenstellung der Rollenhebel 12a, 12b entspricht. Sobald jedoch der Eingriff zwischen dem Betätigungselement 21 und der Steuerfläche 22 gelöst wird, drückt das Federelement 30 den Kniehebel 14 wieder in eine Relativposition seiner Hebelglieder 14a, 14b, die der Parallelposition der Rollenhebel 12a, 12b entspricht.

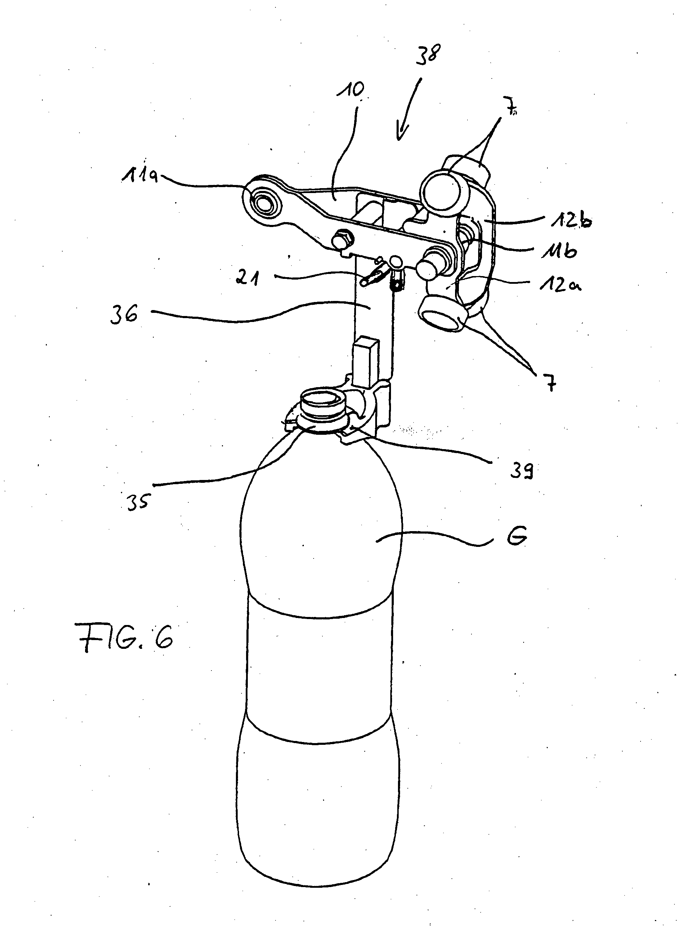

Die Fig. 6 und 7 zeigen Ausführungsbeispiele von Kettengliedern 38 bzw. 48, die durch unterschiedliche Halteeinrichtungen an den Transport unterschiedlicher Gegenstände G angepasst sind. Das Kettenglied 38 enthält einen elastischen Greifer 39, mit dem ein flaschen- bzw. behälterförmiger Gegenstand G, beispielsweise unterhalb eines Halsbereiches oder vorstehenden Tragrings 35 ergriffen werden kann. Der Greifer 39 ist über einen Greiferträger 36 mit dem Träger 10 des Kettengliedes 38 verbunden.

Fig. 7 zeigt ein weiteres Kettenglied 48, das mit einer Halteeinrichtung in Form einer Standplatte 49 ausgerüstet ist, auf der Gegenstände G stehend oder liegend transportierbar sind. Auch die Standplatte 49 ist über einen Plattenträger 45 mit dem Träger 10 des Kettengliedes 48 fest verbunden.

In Abwandlung der beschriebenen und gezeichneten Ausführungsbeispiele können die Befestigungseinrichtungen für die Gegenstände jede geeignete Form annehmen. Statt Federelemente zum Arretieren der Stellung des verschwenkbaren Rollenhebels und/oder als Betätigungselemente zum Verschwenken des Rollenhebels können Magnete eingesetzt werden. Die Rollenhebel können auch als einseitige Hebel ausgebildet und mit einer oder einem Satz Laufrollen versehen sein. Das Betätigungselement muss nicht unbedingt an einem der Hebelglieder, sondern kann beispielsweise auch am Gelenk angreifen. Die Erfindung ist weiterhin nicht nur auf Förderketten anwendbar, sondern kann auch bei anderen Fördermitteln, z.B. bei selbständig verfahrbaren Wagen eingesetzt werden. Bei entsprechend elastischer Gestaltung der Hebelglieder kann auf zusätzliche Federelemente verzichtet werden. Die Anschläge zur Definition der Endlage des Kniehebels können auch am schwenkbaren Rollenhebel angebracht sein. Das am Kettenglied gelagerte Hebelglied kann auch nach Art einer Kurbel in einer Richtung durchdrehen.

## Patentansprüche

1. Fördermittel (1) für Behälter, mit Laufrollen (7), die auf einer Führung (2) abstützbar sind, wobei wenigstens eine Laufrolle (7) an einem mit Hilfe eines Schwenkmechanismus (13, 33) zwischen einer ersten und einer zweiten Position verschwenkbaren und in einer Position arretierbaren Rollenhebel (12a) gelagert ist, wobei der Schwenkmechanismus (13, 33) einen Kniehebel (14) mit einem ersten und einem zweiten, über ein Gelenk (15) miteinander verbundenen Hebelglied (14a, 14b) enthält, der mit einem Betätigungselement (21) in Verbindung steht, wobei das zweite Hebelglied (14b) des Kniehebels (14) mit dem Betätigungselement (21) fest verbunden ist, **dadurch gekennzeichnet, dass** das Betätigungselement (21) eine Steuerfläche enthält, die zum Eingriff mit einer weiteren Steuerfläche (22) außerhalb des Fördermittels (1) ausgebildet ist.

2. Fördermittel nach Anspruch 1, **dadurch gekennzeichnet, dass** die Hebelglieder (14a, 14b) des Kniehebels (14) in wenigstens einer Relativsstellung arretierbar sind.

3. Fördermittel nach einem der Ansprüche 1 oder 2, **dadurch gekennzeichnet, dass** der Kniehebel (14) wenigstens ein vorzugsweise unter Vorspannung stehendes Federelement (19, 30) zum Arretieren der Hebelglieder (14a, 14b) in wenigstens einer Relativstellung enthält.

4. Fördermittel nach Anspruch 3, **dadurch gekennzeichnet, dass** das Federelement (30) eine Drehfeder enthält.

5. Fördermittel nach einem der Ansprüche 1 bis 3, **dadurch gekennzeichnet, dass** der Kniehebel (14) wenigstens ein Federelement (19) zum Arretieren der Hebelglieder (14a, 14b) in zwei Relativstellungen enthält.

6. Fördermittel nach Anspruch 5, **dadurch gekennzeichnet, dass** eines der Hebelglieder (14b) um eine im Abstand zum Gelenk (15) angeordnete Drehachse (16) drehbar gelagert ist, und dass das Federelement (19) eine Zugfeder enthält, die an einem Anlenkpunkt (18) am Hebelglied (14b) angreift, der von der Drehachse (16) derart beabstandet ist, dass sich der Anlenkpunkt (18) beim Verschwenken des Rollenhebels (12a) zwischen seiner ersten und zweiten Position durch eine Todpunktlage bewegt.

7. Fördermittel nach einem der Ansprüche 1 bis 3, **dadurch gekennzeichnet, dass** der Kniehebel (14) wenigstens ein Magnetelement zum Arretieren der Hebelglieder (14a, 14b) in wenigstens einer Relativstellung enthält.

8. Fördermittel nach einem der Ansprüche 1 bis 7, **dadurch gekennzeichnet, dass** der Rollenhebel (12a, 12b) als Doppelhebel ausgebildet ist, an dessen freien Enden jeweils wenigstens eine Laufrolle (7) angeordnet ist.

9. Fördermittel nach einem der Ansprüche 1 bis 8, ausgebildet als Förderkette mit einer Vielzahl von Kettengliedern (8, 28, 38, 48), **dadurch gekennzeichnet, dass** das Kettenglied den Schwenkmechanismus (13, 33) und zwei Doppelhebel (12a, 12b) enthält, an dessen freien Enden jeweils wenigstens eine Laufrolle (7) angeordnet ist, wobei nur einer der Doppelhebel (12a) durch den Schwenkmechanismus (13, 33) verschwenkbar ist.

10. Fördermittel (1) für Behälter, mit Laufrollen (7), die auf einer Führung (2) abstützbar sind, wobei wenigstens eine Laufrolle (7) an einem mit Hilfe eines Schwenkmechanismus (13, 33) zwischen einer ersten und einer zweiten Position verschwenkbaren und in einer Position arretierbaren Rollenhebel (12a) gelagert ist, wobei der Schwenkmechanismus (13, 33) einen Kniehebel (14) mit einem ersten und einem zweiten, über ein Gelenk (15) miteinander verbundenen Hebelglied (14a, 14b) enthält, der mit einem Betätigungselement (21) in Verbindung steht, wobei das zweite Hebelglied (14b) des Kniehebels (14) mit dem Betätigungselement (21) fest verbunden ist, **dadurch gekennzeichnet, dass** der Kniehebel (14) wenigstens ein Federelement (19) zum Arretieren der Hebelglieder (14a, 14b) in zwei Relativstellungen enthält oder dass der Kniehebel (14) wenigstens ein Magnetelement zum Arretieren der Hebelglieder (14a, 14b) in wenigstens einer Relativstellung enthält.

11. Fördereinrichtung (F) mit einer Fördermittel-Führung (2) **dadurch gekennzeichnet, dass** sie ein Fördermittel nach einem der Ansprüche 1 bis 10 aufweist.

12. Fördereinrichtung nach Anspruch 11, **dadurch gekennzeichnet, dass** der Fördermittel-Führung (2) eine Steuerrampe mit einer Steuerfläche (22) zugeordnet ist, die mit dem Betätigungselement (21) in Eingriff tritt.

## Claims

1. Conveying means (1) for containers, having rollers (7), which can be supported on a guideway (2), at least one roller (7) being mounted on a roller lever (12a), which can be swivelled between a first and a second position by means of a swivel mechanism (13, 33) and can be locked in one position, said swivel mechanism (13, 33) comprising a toggle lever (14) - consisting of a first and a second lever member (14a, 14b) connected to one another by a joint (15) - which is connected to an operating element (21), the second lever member (14b) of the toggle lever (14) being rigidly connected to the operating element (21), **characterized in that** the operating element (21) includes a control surface designed to engage with another control surface (22) outside of the conveying means (1).

2. Conveying means according to Claim 1, **characterized in that** the lever members (14a, 14b) of the toggle lever (14) can be locked in at least one relative position.

3. Conveying means according to one of Claims 1 or 2, **characterized in that** the toggle lever (14) includes at least one, preferably prestressed, spring element (19, 30) for locking the lever members (14a, 14b) in at least one relative position.

4. Conveying means according to Claim 3, **characterized in that** the spring element (30) comprises a torsion spring.

5. Conveying means according to one of Claims 1 to 3, **characterized in that** the toggle lever (14) includes at least one spring element (19) for locking the lever members (14a, 14b) in two relative positions.

6. Conveying means according to Claim 5, **characterized in that** one of the lever members (14b) is swivel-mounted about a swivel pin (16) located at a distance from the joint (15), **and in that** the spring element (19) comprises a tension spring, which acts upon the lever member (14b) at a fulcrum (18) which is at such a distance from the swivel pin (16) that, upon swivelling of the roller lever (12a), the fulcrum (18) moves between its first and second position through a dead-centre position.

7. Conveying means according to one of Claims 1 to 3, **characterized in that** the toggle lever (14) comprises at least one magnetic element for locking the lever members (14a, 14b) in at least one relative position.

8. Conveying means according to one of Claims 1 to 7, **characterized in that** the roller lever (12a, 12b) takes the form of a double lever, at least one roller (7) being mounted on each of its free ends.

9. Conveying means according to one of Claims 1 to 8, taking the form of a conveyor chain having a plurality of chain links (8, 28, 38, 48), **characterized in that** the chain link comprises the swivel mechanism (13, 33) and two double levers (12a, 12b) with at least one roller (7) being mounted on each free end, in which case only one of the double levers (12a) can be swivelled by the swivel mechanism (13, 33).

10. Conveying means (1) for containers, having rollers (7), which can be supported on a guideway (2), at least one roller (7) being mounted on a roller lever (12a), which can be swivelled between a first and a second position by means of a swivel mechanism (13, 33) and can be locked in one position, said swivel mechanism (13, 33) comprising a toggle lever (14) - consisting of a first and a second lever member (14a, 14b) connected to one another by a joint (15) - which is connected to an operating element (21), the second lever member (14b) of the toggle lever (14) being rigidly connected to the operating element (21), **characterized in that** the toggle lever (14) includes at least one spring element (19) for locking the lever members (14a, 14b) in two relative positions **or in that** the toggle lever (14) includes at least one magnetic element for locking the lever members (14a, 14b) in at least one relative position.

11. Conveying apparatus (F) having a guideway (2) for the conveying means, **characterized in that** said apparatus comprises conveying means according to one of Claims 1 to 10.

12. Conveying apparatus according to Claim 11, **characterized in that** a control ramp is associated with the guideway (2) for the conveying means, said control ramp having a control surface (22) which engages with the operating element (21).

## Revendications

1. Dispositif de transport (1) de récipients comportant des galets de roulement (7) susceptibles de s'appuyer sur un élément de guidage (2), au moins un galet de roulement (7) étant monté sur un levier à galet (12a) susceptible de pivoter entre une première position et une seconde position à l'aide d'un mécanisme de pivotement (13, 33) et pouvant être bloqué dans une position, le mécanisme de pivotement (13, 33) comportant un levier à genouillère (14) comportant un premier et un second élément de levier (14a, 14b) reliés entre eux par l'intermédiaire d'une articulation (15), qui est relié à un élément d'actionnement (21), le second élément de levier (14b) du levier à genouillère (14) étant relié solidairement à l'élément d'actionnement (21),
**caractérisé en ce que**
l'élément d'actionnement (21) comporte une surface de commande qui est réalisée pour venir en prise avec une autre surface de commande (22) située à l'extérieur du dispositif de transport (1).

2. Dispositif de transport conforme à la revendication 1
**caractérisé en ce que**
les éléments de levier (14a, 14b) du levier à genouillère (14) peuvent être bloqués dans au moins une position relative.

3. Dispositif de transport conforme à l'une des revendications 1 et 2,
**caractérisé en ce que**
le levier à genouillère (14) comporte au moins un élément élastique (19, 30) de préférence précontraint permettant de bloquer les éléments de levier (14a, 14b) dans au moins une position relative.

4. Dispositif de transport conforme à la revendication 3,
**caractérisé en ce que**
l'élément élastique (30) comporte un ressort de torsion.

5. Dispositif de transport conforme à l'une des revendications 1 à 3,
**caractérisé en ce que**
le levier à genouillère (14) comporte au moins un élément élastique (19) permettant de bloquer les éléments de levier (14a, 14b) dans deux positions relatives.

6. Dispositif de transport conforme à la revendication 5,
**caractérisé en ce que**
l'un des éléments de levier (14b) est monté rotatif autour d'un axe de rotation (16) situé à distance de l'articulation (15), et l'élément élastique (19) comporte un ressort de traction qui vient en prise sur l'élément de levier (14b) au niveau d'un point d'articulation (18) qui est situé à une distance de l'axe de rotation (16) telle que lors du pivotement du levier à galet (12a) entre sa première et sa seconde position le point d'articulation (18) se déplace en passant par une position de point mort.

7. Dispositif de transport conforme à l'une des revendications 1 à 3,
**caractérisé en ce que**
le levier à genouillère (14) comporte au moins un élément magnétique permettant de bloquer les éléments de levier (14a, 14b) dans au moins une position relative.

8. Dispositif de transport conforme à l'une des revendications 1 à 7,
**caractérisé en ce que**
le levier à galet (12a, 12b) est réalisé sous la forme d'un double levier aux extrémités libres duquel est respectivement monté un galet de roulement (7).

9. Dispositif de transport conforme à l'une des revendications 1 à 8, réalisé sous la forme d'une chaine transporteuse comportant plusieurs éléments de chaine (8, 28, 38, 48),
**caractérisé en ce que**
l'élément de chaine comprend le mécanisme de pivotement (13, 33) et deux doubles leviers (12a, 12b) aux extrémités libres desquels est respectivement monté au moins un galet de roulement (7), un seul de ces doubles leviers (12a) pouvant être déplacé par pivotement par le mécanisme de pivotement (13, 33).

10. Dispositif de transport (1) de récipients comportant des galets de roulement (7) pouvant s'appuyer sur un élément de guidage (2), au moins un galet de roulement (7) étant monté sur un levier à galet (12a) susceptible de pivoter entre une première position et une seconde position à l'aide d'un mécanisme de pivotement (13, 33) et pouvant être bloqué dans une position, le mécanisme de pivotement (13, 33) comportant un levier à genouillère (14) comprenant un premier et un second élément de levier (14a 14b) reliés entre eux par une articulation (15), qui est relié à un élément d'actionnement (21), le second élément de levier (14b) du levier à genouillère (14) étant relié solidairement à l'élément d'actionnement (21),
**caractérisé en ce que**
le levier à genouillère (14) comprend au moins un élément élastique (19) pour permettre de bloquer les éléments de levier (14a, 14b) dans deux positions relatives, ou, le levier à genouillère (14) comprend au moins un élément magnétique permettant de bloquer les éléments de levier (14a, 14b) dans au moins une position relative.

11. Installation de transport (F) comportant un élément de guidage (2) d'un dispositif de transport,
**caractérisée en ce qu'**
elle comporte un dispositif de transport conforme à l'une des revendications 1 à 10.

12. Installation de transport conforme à la revendication 11,
**caractérisée en ce qu'**
à l'élément de guidage (2) du dispositif d'alimentation est associée une rampe de commande comportant une surface de commande (22) qui vient en prise avec l'élément d'actionnement (21).
